# DEMANDE DE BREVET EUROPEEN

(11) **EP 2 230 644 A1**
(43) Date de publication de la demande: **22.09.2010**
(21) Numéro de dépôt: 10157077.8
(22) Date de dépôt: 19.03.2010
(51) Int. Cl.: G07B 15/00, G01S 1/00

(54) **Procédé et système de détection de véhicules terrestres sur un réseau routier et boîtier de localisation par satellites pour le procédé et le système**

(30) Priorité: 20.03.2009 FR 0901316
(71) Demandeur: CS Systemes d'Informations, 92350 Le Plessis Robinson (FR)
(72) Inventeur: Lamole, Frédéric, 13250 Saint Chamas (FR); Brochet, Yves, 13080 Luynes (FR)
(74) Mandataire: Bloch & Bonnétat

(57) **Abrégé**

Le système comporte un serveur au sol (20) et chaque boîtier de localisation embarqué (21) comporte, relié à une unité centrale (22), un récepteur satellite (25) et un dispositif d'émission/réception de téléphonie cellulaire (27) pour communication avec le serveur au sol (20) et identification. L'unité centrale (22) contient une base de données des points géographiques de localisation et un logiciel de réveil et de mise en veille du boîtier pour que le boîtier soit toujours maintenu au moins en veille et que sa fonction de localisation ne soit réveillée qu'à proximité des points géographiques de localisation.

## Description

Le domaine de l'invention est celui du télépéage pour accéder à un réseau routier payant à bord d'un véhicule terrestre, véhicule léger (voiture ou motocyclette) ou poids lourd. Par réseau routier, il faut entendre tout réseau de routes, chemins, voies, rues, voire même zones de stationnement, que des véhicules terrestres peuvent emprunter.

On connaît les systèmes comportant, au sol, des portiques portant un détecteur et, embarqués, des badges pour usagers détectés par les détecteurs au passage des véhicules sous les portiques. Il peut s'agir d'un passage sans arrêt ou non. L'installation des portiques est onéreuse et c'est pourquoi on a déjà proposé des systèmes de télépéage sans portiques. Leur exploitation s'appuie sur des boîtiers de télépéage embarqués de localisation par satellites, du type GNSS (géolocalisation et navigation par système de satellites), notamment GPS, EGNOS, Galiléo.

Le principe de ces systèmes de télépéage est de remplacer les structures de portique de détection par des portiques virtuels de localisation électronique en des points géographiques prédéterminés sur le réseau payant, le paiement ne dépendant que des passages aux points de localisation et pas de la distance parcourue d'un point de passage à un autre. Par point, il ne faut naturellement pas se limiter à la signification mathématique du terme. Une petite zone pourra parfaitement être considérée comme un point au sens de l'invention de la présente demande.

Mais alimenter ces boîtiers de localisation en permanence n'est pas satisfaisant et c'est ainsi que la demanderesse propose une solution nouvelle à ce problème d'alimentation.

Ainsi l'invention concerne tout d'abord un procédé de détection de véhicules terrestres lors de leur passage en des points géographiques de localisation déterminés d'un réseau routier, au moyen de boîtiers embarqués de localisation par satellites des véhicules, caractérisé par le fait qu'on maintient toujours les boîtiers au moins en veille et on ne réveille leur fonction de localisation qu'à proximité desdits points géographiques de localisation.

Grâce au procédé de l'invention les boîtiers de localisation ne fonctionnent que par intermittence et ils sont très autonomes au plan énergétique du fait de leur consommation limitée.

S'il s'agit de télépéage, et c'est dans ce domaine qu'est née l'idée de l'invention, les points géographiques de localisation sont des points de taxation.

Mais les points géographiques de localisation peuvent être des points de contrôle d'accès ou des points d'avertissement d'une caractéristique topographique particulière.

Ces boîtiers doivent être alimentés. L'alimentation par un allume-cigare n'est pas particulièrement fiable et elle incite à la fraude. L'alimentation par la batterie du véhicule implique une installation qui nécessite une immobilisation du véhicule longue et donc coûteuse. La demanderesse propose ici des systèmes de télépéage basés sur des boîtiers de localisation à alimentation dédiée, sans branchement à une source d'énergie existante des véhicules ni installation particulière, comme, par exemple, un panneau solaire, une pile à combustible, un dispositif de récupération de l'énergie de vibrations avec un capteur piézoélectrique, etc.

Dans la mise en oeuvre préférée du procédé de l'invention, le réveil de la fonction de localisation d'un boîtier est calculé à partir d'un instant de localisation origine, de la distance, à cet instant origine, au point géographique de localisation le plus proche et d'une vitesse maximale du véhicule sur lequel est embarqué le boîtier.

L'instant de localisation origine peut être l'instant de la mise en veille précédente du boîtier ou le point géographique de départ d'un véhicule sur le réseau routier.

Dans le cas d'un procédé de télépéage, la taxation peut s'effectuer à un point géographique de localisation par communication avec un serveur au sol. Mais les transactions peuvent être stockées dans le boîtier et transférées au serveur périodiquement.

Comme il peut y avoir, à côté des routes du réseau routier considéré, d'autres routes non soumises aux mêmes conditions, on adoptera de préférence, comme représentation des points géographiques de localisation, des zones d'une certaine surface ne recoupant pas les routes non soumises aux mêmes conditions.

Dans le cas où le réseau routier serait équipé de structures de portique avec balise de détection, les boîtiers embarqués de localisation par satellites restent en veille.

Dans le cas encore où il s'agirait d'un procédé de télépéage, pour éviter la fraude consistant, par exemple, à masquer le boîtier de localisation au passage d'un point de taxation, on peut avantageusement organiser une détection vidéo des véhicules à titre de contrôle.

L'invention concerne également un système de détection des véhicules terrestres lors de leur passage en des points géographiques de localisation déterminés d'un réseau routier, au moyen de boîtiers embarqués de localisation par satellites des véhicules, le système comportant un serveur au sol et chaque boîtier de localisation embarqué comportant, relié à une unité centrale, un récepteur satellite, et un dispositif d'émission/réception de téléphonie cellulaire pour communication avec le serveur au sol et identification du boîtier, système caractérisé par le fait que l'unité centrale contient une base de données des points géographiques de localisation et un logiciel de réveil et de mise en veille du boîtier.

De préférence, chaque boîtier comporte un capteur de mouvement pour mettre en veille le boîtier quand on coupe le moteur du véhicule sur lequel il est embarqué.

De préférence encore, chaque boîtier comporte une source d'énergie dédiée.

L'invention concerne aussi, à titre de produit intermédiaire, un boîtier de localisation par satellites du système de détection de véhicules terrestres de l'invention.

L'invention sera mieux comprise à l'aide de la description suivante d'un boîtier de localisation par satellites et du procédé et du système de détection de véhicules terrestres, en référence au dessin en annexe, sur lequel
- la figure 1 est une représentation d'un réseau routier payant avec un système de détection de véhicules selon l'invention et
- la figure 2 est un schéma d'un boîtier de localisation par satellites du système de la figure 1.

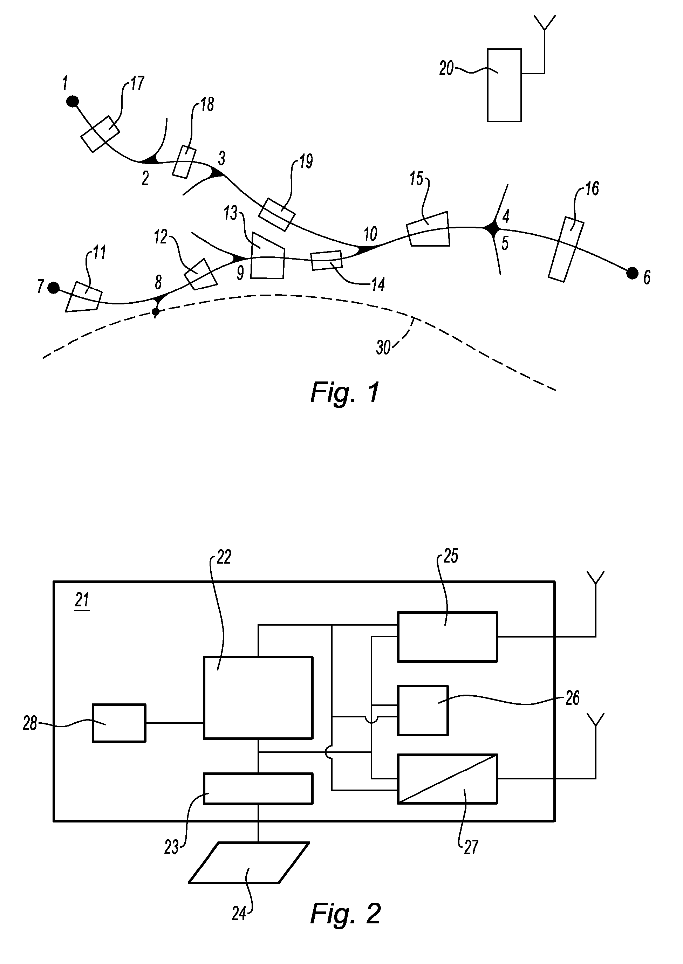

Le système qui va maintenant être décrit est un système de télépéage pour le réseau routier payant de la figure 1. Le réseau routier payant comporte des points d'entrée/sortie, ici dix (1-10), dont le point d'entrée 8, pour les véhicules venant de la route 30 extérieure au réseau, et un certain nombre de points de localisation, ici au nombre de neuf (11-19), qu'on appelle portiques virtuels. La communication de la présence d'un véhicule en ces points à un serveur de taxation 20, ici il y en a un, mais il peut y en avoir plusieurs, permet de déterminer les portiques virtuels du réseau routier que le véhicule a franchis.
Comme des routes extérieures au réseau peuvent être proches de celles du réseau, comme la route 30, afin de permettre, compte tenu de la précision d'une localisation par satellites, une discrimination suffisante, les points de localisation peuvent être de nombre et de forme variable pour chaque tronçon du réseau. Sur la figure 1, le tronçon (9-10) comporte ainsi deux points de localisation 13 et 14 pour permettre de différencier ce tronçon (9-10) du tronçon voisin (3-10). Sur la figure 1, les points de localisation sont de formes différentes pour s'adapter au tracé des routes du réseau payant et des routes proches extérieures au réseau payant.

Le point (13), en fait une surface ici en forme de quadrilatère, est défini, dans la base de données des points géographiques de localisation dont il va être question ci-après, par quatre points correspondant aux sommets du quadrilatère.

Pour mieux appréhender le sens du parcours des véhicules sur le réseau, on peut également utiliser une paire de points distants et disposés sur un même tronçon, comme par exemple sur le tronçon (9-10).

La détection, la localisation et la taxation s'effectuent, sur chaque véhicule empruntant le réseau, à l'aide d'un boîtier embarqué 21.

Chaque boîtier de localisation par satellites 21 (figure 2) comporte une unité de traitement centrale 22, en l'espèce un microcontrôleur, et, reliés à lui, un accumulateur 23, relié ici à un panneau solaire 24, un récepteur satellite 25 - ici un récepteur GPS -, ici encore un badge hyperfréquence 26 d'identification du boîtier et un émetteur/récepteur radio 27, pour communiquer avec le serveur 20 et identifier le boîtier 21. Tous les composants sont également reliés à l'accumulateur 23. Il est également prévu dans le boîtier 21, relié à l'unité centrale 22, un capteur de mouvement 28, pour mettre en veille le boîtier 21 quand le moteur du véhicule sur lequel il est embarqué est coupé. Le badge hyperfréquence d'identification 26 sert à l'identification dans le cas d'un réseau comportant des portiques réels avec balise de détection.

La question de la consommation énergétique a été importante dans la conception du système et du boîtier.

On a prévu ici, comme source d'énergie, un panneau solaire. D'autres sources sont possibles, comme une pile à combustible ou un convertisseur de vibrations en technologie piezoélectrique.

Le contrôleur 22 contient une base de données des points géographiques de localisation (11-19), un logiciel de corrélation des positions fournies par le récepteur GPS 25 et des données de la base et un logiciel de mise en veille du boîtier.

Le procédé de détection, de localisation et, ici, de taxation de l'invention va maintenant être abordé.

Supposons un véhicule en marche arrivant au point d'entrée 1. La mise en marche initiale du moteur a révéillé son boîtier 21 pour la première fois. Celui-ci a alors réveillé sa fonction de localisation et, pour cela, mis le récepteur satellite 25 en fonctionnement. Celui-ci a déterminé sa position par rapport à l'ensemble des points géographiques de localisation et a déterminé le point le plus proche. Après avoir calculé le temps minimal nécessaire pour atteindre ce point, en fonction de la vitesse maximale, le boîtier 21 s'est remis en veille. Au bout de ce temps minimal, le boîtier 21 se réveille et active son récepteur satellite 25. Celui-ci établit sa position, la compare à celle de l'ensemble des points géographiques de localisation et détermine le point le plus proche, dans le cas présent le point 17. Après avoir calculé le temps minimal nécessaire pour atteindre ce point 17, le boîtier 21 se remet en veille.

Lorsque, suite à différentes itérations, le boîtier de localisation 21 détermine qu'il se trouve en un point de localisation ici le point 17, il enregistre cette information. La distance entre le portique 17 et le suivant le plus proche 18 étant connue et disponible dans la base de données des points géographiques de localisation de l'unité centrale 22, le logiciel de réveil, contenu également dans l'unité centrale 22, avant de mettre le boîtier 21 en veille, calcule en fonction de la vitesse maximale du véhicule, la durée que mettra le véhicule pour se trouver à une distance déterminée en amont du point 18 le plus proche du point 17, considéré ici comme point origine, durée au terme de laquelle le logiciel de réveil réveillera la fonction de localisation (22, 25) du boîtier 21, pour procéder comme précédemment et vérifier que le point le plus proche est toujours le point 18. Une fois la fonction de localisation réveillée, quand le boîtier 21 se trouve au point 18, cette information est à son tour enregistrée et le cycle « remise en veille et réveil » se répète, comme précédemment.

A chaque fois, le logiciel de réveil tient compte, pour calculer son instant de réveil, du temps maximal nécessaire au récepteur GNSS pour calculer une nouvelle position, temps qui peut ne pas être négligeable. En temps différé, grâce à l'émetteur-récepteur 27 et au serveur 20, une facturation, de l'utilisation des deux portiques virtuels correspondant aux points 17 et 18, est transmise au possesseur du boîtier de localisation qui a été identifié au moment de son acquisition.

On notera que le logiciel contenu dans l'unité centrale 22, dit logiciel de corrélation, comporte un algorithme d'association des points géographiques de localisation de la base et des localisations réelles du véhicule déterminées par le boîtier 21 à partir des signaux reçus du système de satellites.

On notera que le passage en des points géographiques de localisation d'un véhicule équipé d'un boîtier de localisation suffit à déterminer que ce véhicule a parcouru une partie clairement identifiable du réseau routier dont l'utilisation est soumise à l'acquittement d'une taxe ou d'une redevance.

Les points géographiques de localisation, qu'on peut également qualifier de points géographiques d'intérêt, peuvent être des points d'intérêt pour la circulation ou la mission du véhicule.

## Revendications

1. Procédé de détection de véhicules terrestres lors de leur passage en des points géographiques de localisation déterminés (11-19) d'un réseau routier, au moyen de boîtiers embarqués (21) de localisation par satellites des véhicules, procédé dans lequel on maintient toujours les boîtiers (21) au moins en veille et on ne réveille leur fonction de localisation qu'à proximité desdits points géographiques de localisation (11-19), le réveil de la fonction de localisation d'un boîtier (21) étant calculé à partir d'un instant de localisation origine (1, 17), de la distance, à cet instant origine, au point géographique de localisation le plus proche (18) et d'une vitesse maximale du véhicule sur lequel est embarqué le boîtier (21).

2. Procédé selon la revendication 1, qui est un procédé de télépéage dans lequel les points géographiques de localisation sont des points de taxation (11-19).

3. Procédé selon la revendication 1, dans lequel les points géographiques de localisation sont des points de contrôle d'accès.

4. Procédé selon la revendication 1, dans lequel les points géographiques de localisation sont des points de caractéristique topographique particulière.

5. Procédé selon la revendication 4, dans lequel des instants de mise en veille du boîtier (21) sont des instants de localisation « origine ».

6. Procédé selon l'une des revendications 4 et 5, dans lequel le point géographique de départ d'un véhicule sur le réseau routier est un instant de localisation « origine ».

7. Procédé selon la revendication 2, dans lequel la taxation s'effectue à un point géographique de localisation par communication avec un serveur au sol (20).

8. Procédé selon l'une des revendications 2 et 7, dans lequel on procède également à une détection vidéo des véhicules.

9. Procédé selon l'une des revendications 1 à 8, dans lequel on représente les points géographiques de localisation par des zones d'une certaine surface (11-19).

10. Procédé selon l'une des revendications 1 à 9, dans lequel, le réseau routier étant équipé de structures de portique de détection, les boîtiers embarqués (21) de localisation par satellites restent en veille.

11. Système de détection de véhicules terrestres lors de leur passage en des points géographiques de localisation déterminés d'un réseau routier, au moyen de boîtiers embarqués (21) de localisation par satellites des véhicules, le système comportant un serveur au sol (20) et chaque boîtier de localisation embarqué (21) comportant, relié à une unité centrale (22), un récepteur satellite (25), et un dispositif d'émission/réception de téléphonie cellulaire (27) pour communication avec le serveur au sol (20) et identification du boîtier, **caractérisé par le fait que** l'unité centrale (22) contient une base de données des points géographiques de localisation et un logiciel de réveil et de mise en veille du boîtier.

12. Système selon la revendication 11, dans lequel chaque boîtier (21) comporte un capteur de mouvement (28) pour mettre en veille le boîtier quand on coupe le moteur du véhicule sur lequel il est embarqué.

13. Système selon l'une des revendications 11 et 12, comportant des balises de localisation (31) agencées pour coopérer avec le dispositif d'identification des boîtiers de localisation (21).

14. Boîtier de localisation par satellites du système de détection de véhicules terrestres selon l'une des revendications 11 à 13.

15. Boîtier de localisation selon la revendication 14, comportant une source d'énergie dédiée (24).
